# DEMANDE DE BREVET EUROPEEN

(11) **EP 2 264 419 A1**
(43) Date de publication de la demande: **22.12.2010**
(21) Numéro de dépôt: 10165919.1
(22) Date de dépôt: 15.06.2010
(51) Int. Cl.: G01L 5/28, G01M 17/007

(54) **Banc à rouleaux portatif pour cyclomoteur**

(30) Priorité: 16.06.2009 FR 0902917
(71) Demandeur: Createch Composites, 83870 Signes (FR)
(72) Inventeur: Maillard, Jean-Louis, 83870, SIGNES (FR)
(74) Mandataire: Debay, Yves

(57) **Abrégé**

L'invention consiste en un banc (0) à rouleaux comprenant au moins un châssis muni de deux rouleaux (5) qui est **caractérisé en ce que** les rouleaux (5) possèdent une structure alvéolaire formée d'au moins trois caissons (1) à orifice central disposés le long d'un axe (4) fixe, chaque caisson (1 et 1a) étant associé à un roulement (9) dont la bague intérieure est fixée à l'axe (4) fixe et dont la bague extérieure est fixée au niveau de l'orifice central des caissons (1 et 1a), deux caissons (2) supplémentaires, ne portant pas de roulement (9) étant disposés pour fermer les rouleaux (5) aux extrémités, tous les caissons (1, 1a et 2) étant maintenus solidaires entre eux par un tube (3) en les enveloppant. L'invention consiste également au procédé de fabrication des rouleaux (5).

## Description

### Banc à rouleaux portatif pour cyclomoteur

La présente invention concerne le domaine des bancs à rouleaux pour véhicule et plus particulièrement les bancs à rouleaux pour cyclomoteurs. La présente invention propose un banc à rouleaux pour cyclomoteur permettant de vérifier la vitesse maximale d'un cyclomoteur.

Le contrôle des cyclomoteurs est une des priorités dans la lutte contre les accidents de la route. Les accidents de cyclomoteurs touchent nombres jeunes usagers principaux utilisateurs de ce type de véhicules. Des règlementations ont pour objectif de limiter le nombre d'accidents de cyclomoteur en imposant le port du casque et l'obtention d'un brevet de sécurité routière, en conseillant le port de vêtements protecteurs et en limitant la vitesse des cyclomoteurs à 45 km/h par bridage du moteur.

Or, certains utilisateurs de cyclomoteurs effectuent un débridage de leur cyclomoteur qui consiste à falsifier le moteur pour en augmenter ses performances et sa puissance et, par conséquent, sa vitesse maximale.

Le contrôle de la vitesse maximale des cyclomoteurs consiste généralement à une vérification visuelle de différents organes et à un essai sur route. Or, ce contrôle n'est pas totalement fiable.

Le brevet DE 25 40 416 décrit un banc à rouleaux pour tester le rendement et/ou les freins d'un véhicule plus particulièrement de véhicules automobiles. Chaque rouleau est composé d'un axe de section carrée ou hexagonale et de demi-coques composées d'un mélange de roche granulaire et de résine durcie et dont la forme interne correspond exactement à la forme extérieure de l'axe. Les demi-coques sont alors disposées côte à côte le long de l'axe de telle façon que chaque demi-coque est liée à une autre demi-coque lui faisant face. Les demi-coques sont fabriquées d'une matière assez dense et solide pour pouvoir résister aux contraintes demandées lors des tests. Ce banc à rouleaux ne permet donc pas une portabilité aisée.

La présente invention a pour but de proposer une solution pour un contrôle fiable et pratique des vitesses de cyclomoteurs en proposant un banc à rouleaux portatif permettant de vérifier la vitesse maximale des cyclomoteurs.

Pour atteindre ce but, le banc à rouleaux comprenant au moins un châssis muni de deux rouleaux
**caractérisé en ce que** les rouleaux possèdent une structure alvéolaire formée de caissons à orifice central en forme de cylindre dont une extrémité est ouverte pour former l'ouverture du caisson et dont l'autre extrémité est partiellement fermée avec un orifice central, au moins trois caissons à orifice central étant disposés le long d'un axe fixe par l'orifice central, de telle façon que l'ouverture de chaque caisson est dans la même direction, le dernier caisson possédant une direction d'ouverture opposée aux ouvertures des autres caissons, chaque caisson étant associé à un roulement dont la bague intérieure est fixée à l'axe (4) fixe et la bague extérieure est fixée au niveau de l'orifice central des caissons, deux caissons supplémentaires, ne comportant pas de roulement, n'étant pas en contact avec l'axe et dont les ouvertures font face à l'intérieur des rouleaux, étant disposés avec un jeu autour de l'axe fixe pour fermer le rouleau aux extrémités, tous les caissons étant maintenus solidaires entre eux par un tube les enveloppant.

Selon une autre particularité, les au moins trois caissons sont disposés de façon équidistante entre eux.

Selon une autre particularité, l'axe est fixe par rapport au châssis.

Selon une autre particularité, le banc comporte en outre un module de commande comportant la partie électronique de traitement des données, reliée à un module de mesure, et un moyen d'affichage.

Selon une autre particularité, le tube est formé par des couches superposées de composite, par exemple du carbone, imprégnées d'une résine thermodurcissable.

Selon une autre particularité, les caissons sont constitués de fibres de verre tissées imprégnées d'une résine polymère thermodurcissable.

Selon une autre particularité, le tube est formé de feuilles de carbone imprégnées d'une résine polymère thermodurcissable qui éventuellement imprègne en surface des grains de matières abrasives.

Selon une autre particularité, le châssis est équipé d'au moins un capteur disposées à proximité du trajet des pastilles métalliques fixées périodiquement en couronne et en surface d'au moins un rouleau envoyant un signal indiquant la position du ou des rouleau(x) au module de mesure apte à mesurer la vitesse de rotation du ou des rouleau(x) qui est envoyée au module électronique de traitement.

Un autre but de l'invention est de proposer un procédé de fabrication d'un rouleau du banc à rouleaux caractérisé en ce qu'il comporte au moins les étapes suivantes :
- une étape de découpage d'une pluralité de disques dans un tissu de fibres de verre tissées;
- une étape de formage en caissons des disques de tissu de fibres de verre tissées à l'aide de moules ;
- une étape d'imprégnation puis de polymérisation d'une résine entre les fibres de verre tissées du tissu formé en caisson dans le moule.

Selon une autre particularité, le procédé comporte en outre les étapes suivantes :
- une étape de montage de roulements le long d'un axe au niveau de la bague intérieure de chaque roulement ;
- une étape d'enfilement des caissons le long de l'axe et de montage de l'orifice central des caissons sur la bague extérieure de chaque roulement ;
- une étape d'intégration et de montage dans un tube de longueur supérieure à la distance séparant les caissons à roulement extrêmes des caissons fixés sur l'axe par l'intermédiaire des roulements ;
- une étape de montage aux extrémités du tube de caissons supplémentaire de façon à fermer les extrémités du tube.

Selon une autre particularité, le procédé comporte en outre les étapes suivantes :
- une étape de montage de l'orifice central d'au moins trois caissons sur la bague extérieure de roulements ;
- une étape d'enfilement des caissons et de montage des roulements des caissons au niveau de la bague intérieure de chaque roulement le long d'un axe ;
- une étape d'intégration et de montage dans un tube de longueur supérieure à la distance séparant les caissons à roulement extrêmes des caissons fixés sur l'axe par l'intermédiaire des roulements ;
- une étape de montage aux extrémités du tube de caissons supplémentaire de façon à fermer les extrémités du tube.

Selon une autre particularité, le montage de roulements le long de l'axe est réalisé de façon équidistante entre chaque roulement.

Selon une autre particularité, l'étape d'intégration et de montage dans un tube des caissons est précédée d'étapes de fabrication du tube consistant au moins en :
- une étape de couverture de couches de composites autour d'un cylindre de même diamètre intérieur que le diamètre des caissons et d'au moins de même longueur que la longueur d'un rouleau ;
- une étape d'imprégnation des couches de composites par une résine polymère thermodurcissable ;
- une étape d'intégration de pastilles métalliques selon un plan perpendiculaire à l'axe du tube périodiquement de telle façon que, lors du fonctionnement du banc à rouleaux, toutes les pastilles passent à proximité d'un capteur fixé sur le châssis.

Selon une autre particularité, l'étape d'imprégnation des couches de composites par une résine polymère thermodurcissable est suivie d'une étape d'imprégnation de grains de matières abrasives en surface du tube.

Selon une autre particularité, l'étape de montage de roulements est au moins précédée des étapes suivantes :
- une étape d'usinage d'un axe ;
- une étape de découpe des extrémités.

Un autre but de l'invention est de proposer un moule composé de deux pièces complémentaires cylindriques dont une pièce femelle venant envelopper une pièce mâle en s'emboîtant, un espace restant entre les pièces étant de la forme du caisson, la pièce femelle du moule possédant en son centre un axe cylindrique saillant de forme complémentaire à un orifice cylindrique situé au centre de la pièce mâle du moule.

D'autres particularités et avantages de la présente invention apparaîtront plus clairement à la lecture de la description ci-après, faite en référence au dessin annexé :
- la figure 1 représente le banc à rouleaux.
- la figure 2 représente le rouleau selon une configuration.
- la figure 3a représente la pièce femelle du moule, la figure 3b représente la pièce mâle du moule, la figure 3c représente le moule au moment de la fabrication d'un caisson.

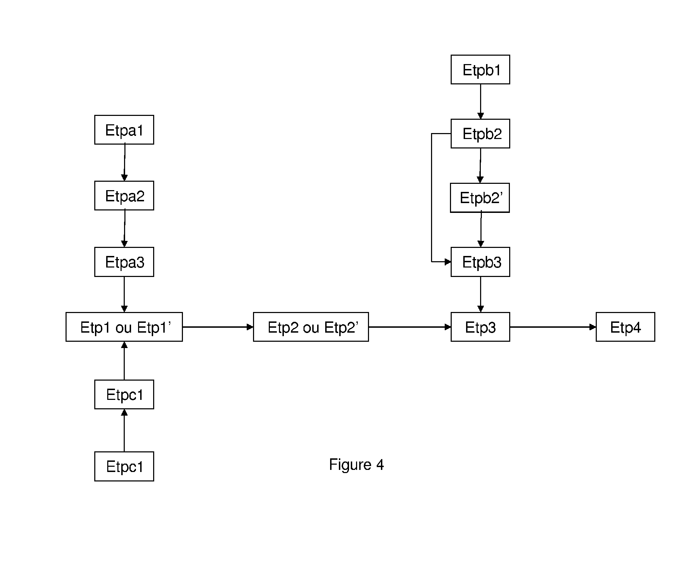

- la figure 4 illustre le procédé de fabrication du rouleau (5).

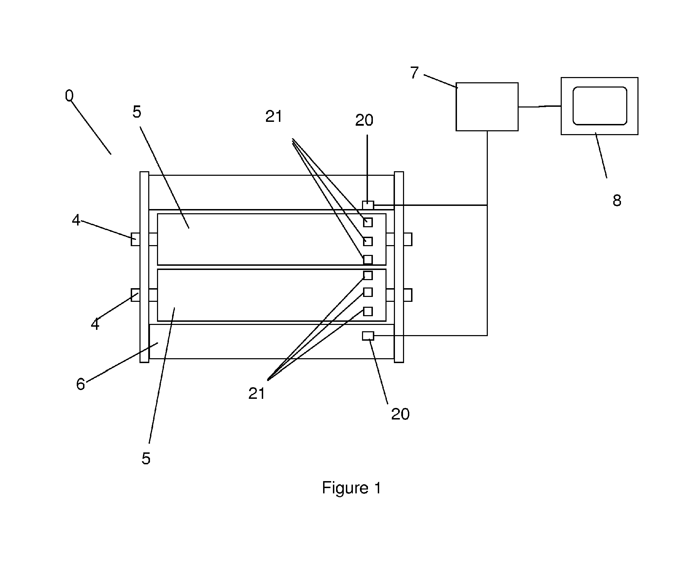

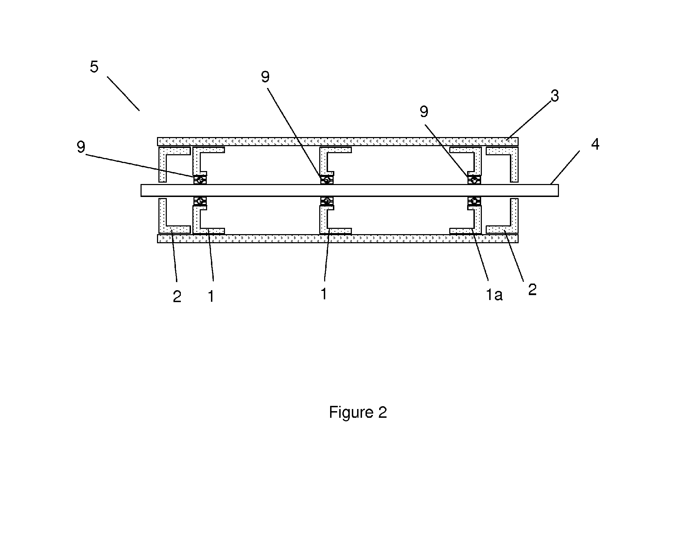

En référence aux figures 1 et 2, l'invention concerne un banc (0) à rouleaux permettant de vérifier la vitesse maximale d'un cyclomoteur pour savoir si le cyclomoteur est débridé. Le cyclomoteur est dit débridé si son moteur est falsifié pour en augmenter ses performances et sa puissance et, par conséquent, sa vitesse maximale.

Le banc (0) est portable et léger et peut entrer dans le coffre d'une voiture.

Il (0) est composé au moins d'un châssis (6) muni d'au moins deux rouleaux (5) et au moins deux axes (4) fixes par rapport au châssis (6).

La roue motrice du cyclomoteur est posée sur les rouleaux (5). Le cyclomoteur atteint sa vitesse maximale. Par l'intermédiaire de la vitesse de rotation des rouleaux (5) entraînés par la rotation de la roue motrice du cyclomoteur, on en déduit la vitesse maximale du cyclomoteur.

Chaque rouleau (5) possède une structure alvéolaire.

Cette structure alvéolaire est formée d'au moins trois caissons (1 et 1a) enfilés de façon préférentiellement équidistante entre eux autour d'un axe fixe (4). Chaque caisson (1, 1a) a, par exemple, une forme cylindrique dont une extrémité est ouverte pour former l'ouverture du caisson (1, 1a) et dont l'autre extrémité est partiellement fermée avec un orifice central. L'ouverture de chaque caisson (1) est dans la même direction. Cependant, le dernier caisson (1a) possède une direction d'ouverture opposée aux autres caissons (1).

Chaque caisson est percé d'un orifice central en son centre afin de laisser passer l'axe (4) fixe.

Chaque caisson (1 et 1a) porte un roulement (9) aux points de contact avec l'axe (4) fixe. La bague intérieure du roulement (9) est fixée sur l'axe (4) fixe. La bague extérieure du roulement (9) est fixée au niveau de l'orifice central du caisson.

Le roulement (9) peut être de n'importe quel type ; de manière non-limitative, il est à billes, à rouleaux cylindriques ou coniques ou à aiguilles.

Deux caissons (2) supplémentaires, ayant leurs ouvertures qui font face à l'intérieur des rouleaux (5), ferment les rouleaux (5) à leurs extrémités. Le trou à travers lequel l'axe (4) fixe du rouleau (5) passe a un diamètre légèrement plus grand que le diamètre de l'axe (4) afin que les rouleaux (5) puissent tourner autour de l'axe (4) fixe sans frottement. Le jeu entre les bords des trous et l'axe (4) fixe peut être de l'ordre de 1 mm.

Pour maintenir solidaires les caissons (1, 1a et 2) entre eux et/ou pour assurer la rigidité et la résistance mécanique du rouleau (5), un tube (3) de diamètre intérieur sensiblement égal aux diamètres des caissons enveloppe l'ensemble des caissons.

Ainsi les rouleaux peuvent tourner autour de l'axe (4) fixe par l'intermédiaire des roulements qui joignent l'axe (4) fixe et les caissons (1) situés entre les caissons supplémentaires.

Le tube est composé de couches de composites, par exemple du carbone, imprégnées d'une résine thermodurcissable.

De manière non-limitative, les caissons (1) sont constitués de fibres de verre, de façon avantageuse mais non-limitative, quadri-directionnelles imprégnées d'une résine polymère thermodurcissable. Cette résine polymérise sur une période assez courte, par exemple, d'environs 8 min à une température de 110°C.

Afin d'augmenter l'adhérence des rouleaux (5) à la roue d'un cyclomoteur, la résine imprègne éventuellement en surface des grains de matières abrasives.

Au moins un rouleau (5) est équipé d'une ou de plusieurs pastilles (21) métalliques magnétiques ou non-magnétiques qui s'associent à au moins un capteur (20) fixé sur le châssis (6). Cette ou ces pastilles (21) sont aptes à envoyer un signal indiquant un tour complet du ou des rouleau(x) (5). Le ou les capteurs (20) sont reliés à un module de mesure capable de mesure la vitesse de rotation puis envoyé à un module électronique de traitement (7) comportant un programme permettant de convertir la vitesse de rotation des rouleaux (5) en vitesse linéaire. Cette vitesse linéaire obtenue peut être pondérée en tenant compte des conditions réelles d'utilisation d'un cyclomoteur. La disposition des pastilles (21) et des capteurs (20) ne doit pas être limitée à celle présentée sur la figure 1.

Lors de la rotation de la pièce et donc de la ou des pastilles métalliques, le capteur détecte son ou leur passage. On peut ainsi mesurer la vitesse de rotation qui dépend de la fréquence du signal détecté par le ou les capteurs.

Dans le cas de pastilles magnétiques, de façon non-limitative, les capteurs peuvent être des capteurs à effet Hall. Les capteurs de vitesse à effet Hall sont connus de l'art antérieur. Ils sont habituellement constitués d'une couronne aimantée présentant une alternance de pôles magnétiques Nord et Sud. Cette couronne, liée en rotation avec une pièce dont on souhaite mesurer la vitesse de rotation, passe devant un capteur de champ magnétique à effet Hall.

Le ou les pastilles métalliques sont fixées en étant préférentiellement noyées dans le rouleau.

Le procédé de fabrication du rouleau (5) comporte plusieurs étapes.

Les premières étapes permettent la fabrication des caissons (1) formant le cylindre du rouleau (5).

Un caisson (1, 1a, 2) est fabriqué à partir d'un tissu de fibre de verre dans lequel est découpé un disque (Etpa1). De façon avantageuse mais non-limitative, le tissu est composé de fibres de verre tissées.

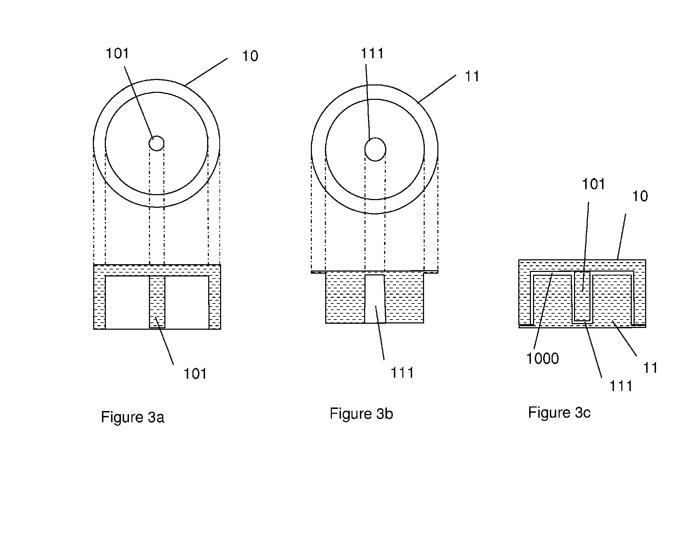

Une étape (Etpa2) de formage du disque de tissu de fibres de verre permet le formage des caissons à l'aide d'un moule composé de deux pièces complémentaires cylindriques dont une pièce (10) femelle venant envelopper une pièce (11) mâle en s'emboîtant en référence aux figures 3a, 3b et 3c..

Lorsqu'elles sont emboîtées, les deux pièces complémentaires du moule créent un espace (1000) entre elles de la forme du caisson (1, 1a, 2) à former. De plus, la pièce (10) femelle du moule possède en son centre un axe (101) cylindrique saillant de forme complémentaire à un orifice (111) cylindrique situé au centre de la pièce (11) mâle du moule. Cet axe (101) cylindrique saillant permet de créer un trou au centre des caissons (1, 1a, 2) pour pouvoir enfiler les caissons (1, 1a, 2) le long de l'axe (4) fixe. Le diamètre de l'axe (101) cylindrique saillant est sensiblement égal au diamètre de l'axe (4) fixe du rouleau (5).

Un disque de tissu de fibres de verres est disposé entre les deux pièces du moule en prenant la forme imposée par le moule.

De la résine polymère thermodurcissable est alors introduite dans le moule par une ouverture dans le moule pour imprégner (Etpa3) le tissu de fibres de verre. Le moule est alors fermé pour laisser la résine se polymériser. De façon avantageuse mais non-limitative, la résine utilisée polymérise en 8 min environs à une température de 110°C.

Au bout du temps de polymérisation, le moule est ouvert et le caisson (1, 1a, 2) est éjecté.

Les caissons (1, 1a) ainsi fabriqués peuvent être alors disposés mais de façon non-limitative selon la configuration représentée sur la figure 1 en étant enfilées sur un axe (4) à travers un orifice situé au centre de chaque caisson. Selon un mode de réalisation, au préalable (Etp1), des roulements (9) auront été fixés de façon équidistante entre eux le long d'un axe (4) au niveau de la bague intérieure des roulements (9). Dans une étape (Etp2) suivante, les caissons (1 et 1a) sont enfilés le long de l'axe (4) et sont fixés au niveau d'un orifice central des caissons (1 et 1a) sur les bagues extérieures des roulements (9). Chaque caisson (1 et 1a) est associé à un roulement (9) de façon à ce que les caissons (1) tournent librement autour de l'axe (4) fixe.

Selon un autre mode de réalisation, au préalable (Etp1'), des roulements (9) auront été montés au niveau de leur bague extérieure aux orifices centraux respectifs d'au moins trois caissons (1 et 1a). Dans une étape suivante (Etp2'), les caissons (1 et 1a) sont enfilés et les roulements (9) des caissons (1 et 1a) montés au niveau de la bague intérieure de chaque roulement (9) le long de l'axe (4). Chaque caisson (1 et 1a) est associé à un roulement (9) de façon à ce que les caissons (1) tournent librement autour de l'axe (4) fixe.

Une étape (Etp3) suivante consiste en l'intégration et le montage des caissons (1 et 1a) dans un tube (3) rapporté composé de couches de composites imprégnés d'une résine thermodurcissable. Ce tube (3) est de longueur supérieure à la distance séparant les caissons (1 et 1a) à roulement (9) extrêmes.

Dans la configuration de la figure 1, deux caissons supplémentaires (2) sont alors disposés (Etp4) et fixé aux extrémités du rouleau pour fermer le rouleau (5).

Le rouleau (5) peut alors être installé sur le banc à rouleaux (0) en fixant l'axe (4) fixe sur le châssis.

Les étapes de la procédure peuvent être précédées par les étapes de fabrication de l'axe (4) du rouleau (5). Ces étapes consistent en au moins une étape (Etpc1) d'usinage de l'axe (4), une étape (Etpc2) de découpage des extrémités de l'axe (4).

La fabrication du tube (3) comporte plusieurs étapes.

Dans une étape (Etpb1), un cylindre de même diamètre que les caissons et d'au moins la même longueur que la longueur d'un rouleau (5) est recouvert de couches de composites.

Les couches de composites sont alors imprégnées (Etpb2) par une résine polymère thermodurcissable.

Des grains de matières abrasives sont éventuellement imprégnées (Etpb2') en surface du tube (3) afin d'augmenter l'adhérence de la surface du tube (3).

Avant ou après le temps de polymérisation de la résine polymère thermodurcissable, des pastilles (21) métalliques qui s'associent à au moins un capteur (20) fixé sur le châssis (6) sont fixées (Etpb3) sur ou au voisinage de la surface du tube, de façon non-limitative, par collage ou par noyage dans la résine polymère thermodurcissable. La disposition des pastilles (21) et des capteurs (20) ne doit pas être limitée à celle présentée sur la figure 1.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Banc (0) à rouleaux comprenant au moins un châssis muni de deux rouleaux (5)
est **caractérisé en ce que** les rouleaux (5) possèdent une structure alvéolaire formée de caissons (1, 1a) à orifice central en forme de cylindre dont une extrémité est ouverte pour former l'ouverture du caisson et dont l'autre extrémité est partiellement fermée avec un orifice central, au moins trois caissons (1, 1a) à orifice central étant disposés le long d'un axe (4) fixe par l'orifice central, de telle façon que l'ouverture de chaque caisson (1) est dans la même direction, le dernier caisson (1a) possédant une direction d'ouverture opposée aux ouvertures des autres caissons (1), chaque caisson (1 et 1a) étant associé à un roulement (9) dont la bague intérieure est fixée à l'axe (4) fixe et dont la bague extérieure est fixée au niveau de l'orifice central des caissons (1 et 1a), deux caissons (2) supplémentaires, ne comportant pas de roulement (9), n'étant pas en contact avec l'axe (4) fixe et dont les ouvertures font face à l'intérieur des rouleaux (5), étant disposés avec un jeu autour de l'axe (4) fixe pour fermer les rouleaux (5) aux extrémités, tous les caissons (1, 1a et 2) étant maintenus solidaires entre eux par un tube (3) en les enveloppant.

2. Banc (0) à rouleaux selon la revendication 1, **caractérisé en ce que** les trois caissons sont disposés de façon équidistante entre eux.

3. Banc (0) à rouleaux selon la revendication 1, **caractérisé en ce que** l'axe (4) fixe est fixe par rapport au châssis (6).

4. Banc (0) à rouleaux selon la revendication 1, **caractérisé en ce que** le banc (0) comporte en outre un module de commande comportant la partie électronique (7) de traitement des données, reliée à un module de mesure, et un moyen d'affichage (8).

5. Banc (0) à rouleaux selon la revendication 1, **caractérisé en ce que** le tube (3) est formé par des couches superposées de composite imprégnées d'une résine polymère thermodurcissable.

6. Banc (0) à rouleaux selon la revendication 1, **caractérisé en ce que** les caissons (1) sont constituées de fibres de verre tissées imprégnées d'une résine polymère thermodurcissable.

7. Banc (0) à rouleaux selon la revendication 1, **caractérisé en ce que** le tube est formé de feuilles de carbones imprégnées d'une résine polymère thermodurcissable qui éventuellement imprègne en surface des grains de matières abrasives.

8. Banc (0) à rouleaux selon les revendication 1 à 7, **caractérisé en ce que** le châssis (6) est équipé d'au moins un capteur (20) disposé à proximité du trajet des pastilles (21) métalliques fixées périodiquement en couronne et en surface d'au moins un rouleau (5) envoyant un signal indiquant la position du ou des rouleaux (5) au module de mesure apte à mesurer la vitesse de rotation du ou des rouleaux (5) qui est envoyée au module électronique de traitement (7).

9. Procédé de fabrication d'un rouleau (5) de banc (0) à rouleaux **caractérisé en ce qu'**il comporte au moins les étapes suivantes :
- une étape (Etpa1) de découpage d'une pluralité de disques dans un tissu de fibres de verres tissées ;
- une étape (Etpa3) de formage en caissons des disques de tissu de fibres de verre tissées à l'aide de moules ;
- une étape (Etpa3) d'imprégnation puis de polymérisation d'une résine entre les fibres de verre tissées du tissu formé en caisson dans le moule.

10. Procédé de fabrication selon la revendication 9 **caractérisé en ce qu'**il comporte en outre les étapes suivantes :
- une étape (Etp1) de montage de roulements (9) le long d'un axe (4) au niveau de la bague intérieure de chaque roulement (9) ;
- une étape (Etp2) d'enfilement des caissons (1 et 1a) le long de l'axe (4) et de montage de l'orifice central des caissons (1 et 1a) sur la bague extérieure de chaque roulement (9) ;
- une étape (Etp3) d'intégration et de montage dans un tube (3), de longueur supérieure à la distance séparant les caissons à roulement extrêmes, des caissons (1 et 1a) fixés sur l'axe (4) par l'intermédiaire des roulements (9) ;
- une étape (Etp4) de montage aux extrémités du tube (3) de caissons (2) supplémentaires de façon à fermer les extrémités du tube (3).

11. Procédé de fabrication selon la revendication 9 **caractérisé en ce qu'**il comporte en outre les étapes suivantes :
- une étape (Etp1') de montage de l'orifice central d'au moins trois caissons (1 et 1a) sur la bague extérieure de roulements (9) ;
- une étape (Etp2') d'enfilement des caissons (1 et 1a) et de montage des roulements (9) des caissons (1 et 1a) au niveau de la bague intérieure de chaque roulement (9) le long d'un axe (4) ;
- une étape (Etp3) d'intégration et de montage dans un tube (3), de longueur supérieure à la distance séparant les caissons à roulement extrêmes, des caissons (1 et 1a) fixés sur l'axe (4) par l'intermédiaire des roulements (9) ;
- une étape (Etp4) de montage aux extrémités du tube (3) de caissons (2) supplémentaires de façon à fermer les extrémités du tube (3).

12. Procédé de fabrication selon la revendication 10 ou 11 **caractérisé en ce que** le montage de roulements (9) le long de l'axe (4) est réalisé de façon équidistante entre chaque roulement (9).

13. Procédé de fabrication selon la revendication 10 ou 11 **caractérisé en ce que** l'étape (Etp3 ou Etp3') d'intégration et de montage dans un tube (3) des caissons (1 et 1a) est précédée des étapes de fabrication du tube (3) consistant au moins en :
- une étape (Etpb1) de couverture de couches de composites autour d'un cylindre de même diamètre intérieur que le diamètre des caissons (1, 1a et 2) et d'au moins de même longueur que la longueur d'un rouleau (5) ;
- une étape (Etpb2) d'imprégnation des couches de composites par une résine polymère thermodurcissable ;
- une étape (Etpb3) d'intégration de pastilles (21) métalliques en surface du tube (3) selon un plan perpendiculaire à l'axe du tube périodiquement de telle façon que, lors du fonctionnement du banc (0) à rouleaux, toutes les pastilles (21) passent à proximité d'un capteur (20) fixé sur le châssis (6).

14. Procédé de fabrication selon la revendication 13 **caractérisé en ce que** l'étape (Etpb2) d'imprégnation des couches de composites par une résine polymère thermodurcissable est suivie d'une étape (Etpb2') d'imprégnation de grains de matières abrasives en surface du tube (3).

15. Procédé de fabrication selon la revendication 10 ou 11 **caractérisé en ce que** l'étape de montage de roulements (9) est au moins précédée des étapes suivantes :
- une étape (Etpc1) d'usinage d'un axe (4) ;
- une étape (Etpc2) de découpe des extrémités.

16. Moule destiné à fabriquer un caisson (1, 1a et 2) composant la structure d'un rouleau (5) de banc (0) à rouleaux **caractérisé en ce qu'**il est composé de deux pièces complémentaires cylindriques dont une pièce (10) femelle venant envelopper une pièce (11) mâle en s'emboîtant, un espace (1000) restant entre les pièces étant de la forme du caisson (1), la pièce (10) femelle du moule possédant en son centre un axe (101) cylindrique saillant de forme complémentaire à un orifice (111) cylindrique situé au centre de la pièce (11) mâle du moule.
